# EUROPEAN PATENT SPECIFICATION

(11) **EP 3 474 182 B1**
(45) Date of publication and mention of the grant of the patent: **22.11.2023**
(21) Application number: 17197026.2
(22) Date of filing: 18.10.2017
(51) Int. Cl.: G06V 20/58, G06V 10/776, B60W 30/08

(54) **A VISION SYSTEM AND METHOD FOR AUTONOMOUS DRIVING AND/OR DRIVER ASSISTANCE IN A MOTOR VEHICLE**
SICHTSYSTEM UND VERFAHREN ZUM AUTONOMEN FAHREN UND/ODER ZUR FAHRERASSISTENZ IN EINEM KRAFTFAHRZEUG
SYSTÈME DE VISION ET PROCÉDÉ POUR ENTRAÎNEMENT AUTONOME ET/OU D'AIDE À LA CONDUITE DANS UN VÉHICULE À MOTEUR

(43) Date of publication of application: 24.04.2019
(73) Proprietor: Arriver Software AB, 583 30 Linköping (SE)
(72) Inventor: Persson, Gustav, 58336 Linköping (SE); Cronvall, Per, 58332 Linköping (SE)
(74) Representative: Loveless, Ian Mark

(56) References cited:
- DE-A1-102004 046 101
- JP-A- 2008 027 309
- US-A1- 2009 195 371
- US-A1- 2012 283 895
- US-A1- 2014 278 059
- GU YANLEI ET AL: "Recognition and pose estimation of urban road users from on-board camera for collision avoidance", 17TH INTERNATIONAL IEEE CONFERENCE ON INTELLIGENT TRANSPORTATION SYSTEMS (ITSC), IEEE, 8 October 2014 (2014-10-08), pages 1266-1273, XP032685511, DOI: 10.1109/ITSC.2014.6957861 [retrieved on 2014-11-14]

## Description

The invention relates to a vision system for a motor vehicle, comprising an imaging apparatus adapted to capture images from a region surrounding the motor vehicle, a data processing device comprising an object detector adapted to detect and classify objects in the vehicle surrounding by processing images captured by the imaging apparatus, and a decision module adapted to estimate a collision probability of a detected object with the motor vehicle, and to make an intervention decision in case a detected object has a non-tolerable collision probability. The invention also relates to a corresponding vision method.

A vision system as described above is for example disclosed in WO 2006 026688 A2.

In an automotive active safety system it is important to act in dangerous situations, but also important not to make unnecessary interventions. In an object detection system, false interventions are typically caused by false detections, for example due to misclassifications.

In a typical camera based active safety system, a real-time computer vision algorithm will be assigned a computational time budget determined by the frame-rate of the camera. When dealing with safety based systems, a trade-off is typically made between computational cost and functional performance. For example the functional performance of an object detection system can be improved by using more computationally expensive features and classifiers, but at the cost of making the system slower or more expensive.

US 2014/0278059 A1 discloses a vision system for a motor vehicle according to the preamble of claim 1.

US 2012/0283895 A1, JP 2008 027309 A1, US 2009/0195371 A1 and DE 10 2004 046 101 A1 disclose further vision systems for a motor vehicle.

Y. Gu et al., "Recognition and Pose Estimation of Urban Road Users from On-board Camera for Collision Avoidance", 2014 IEEE 17^{th} Int. Conf. on Intelligent Transportation Systems (ITSC), 8.-11.10.2014, Qingdao, CN, discloses a pedestrian recognition system with an HOG-SVM classifier and a downstream CoHOG-SVM classifier for verification in case the HOG-SVM classifier recognizes a pedestrian.

The object of the invention is to provide a vision system and method for a motor vehicle which is able to make best use of the available processing resources in order to obtain an optimal classification result for making highly reliable intervention decisions, and avoiding false interventions.

The invention solves this object with the features of the independent claims. According to the invention, a critical object classifier is connected to the decision module in a feedback loop. The decision module is adapted to identify, among all detected objects, a sub-group of critical objects having a high potential of causing an intervention, and to feed information regarding identified critical objects to the critical object classifier. The critical object classifier is adapted to confirm/verify, or reject the classification of the object detector, and to feed back a result of the verification to the decision module. The purpose of the invention is thus to use the processing resources in an efficient manner through prioritization.

Identifying critical objects, i.e. those objects among all detected objects which have the highest collision probability, and/or a collision probability exceeding a predetermined threshold, in the decision module corresponds to prioritizing critical objects over non-critical objects. By prioritizing critical objects or regions before applying a more powerful classifier, namely the critical object classifier, the best utilization of available resources can be obtained. This can be achieved by using a feedback system, where preferably critical objects detected in one frame period are fed into the next frame period for verification.

A critical object is an object that potentially requires an intervention, in order to avoid a collision of the ego vehicle with the critical object.

Preferably the object detector and the critical object classifier share processing resources of the data processing device, by sharing a total processing time budget. In other words, the total processing time budget is split between the object detector and the critical object classifier.

Advantageously, the total processing time budget is completely allocated to the object detector in case no critical object has been determined in the, or a, previous frame. In case a critical object has been determined in the, or a, previous frame, a part of the total processing time budget is allocated to the critical object classifier and a correspondingly reduced time budget is allocated to the object detector. Preferably the object detector is informed about its reduced processing time budget in this case. This allows the object detector preferably to prioritize its object detection and classification processing according to the reduced time budget it has been informed about.

The object detector is thus designed to utilize its time budget optimally. During normal operation this means that preferably the object detector is allowed to use the entire processing time budget, e.g. the whole frame time. Preferably the object detector should be balanced such that all objects of interest, like pedestrians, bicycles, other vehicles etc., can, in typical scenarios, be detected within this time frame.

When the decision module identifies a critical object, i.e. an object with the potential of causing an intervention, this object is fed into the critical object classifier for verification. This relatively expensive classifier, in terms of consumed processing resources, makes use of the time budget allocated to the regular object detector for a following, in particular the next time frame.

According to the invention, the critical object classifier has higher classification capabilities, or in other words, is computationally more expensive or complex or powerful than the classifier in the object detector. This allows the critical object classifier to classify critical objects, having a high collision probability, with a much higher reliability than the object detector. If the critical classifier is a feature based classifier for example, the higher classification capability can be achieved by using a larger number of features and/or more complex features than the classifier in the object detector.

The higher processing times required by the critical object classifier are affordable because the number of critical objects which are investigated by the critical object classifier is small as compared to all objects detected by the object detector, preferably at least a factor of ten smaller, more preferably at least a factor of 100 smaller, most preferably at least a factor of 1000 smaller. Due to the very small number of critical objects to be investigated by the critical object classifier, the time budget taken away from the object detector by the critical object classifier is acceptable, and there can always be a non-zero part of the time budget remaining for the object detector. Summarizing the above, only a small subset of the objects detected by the object detector is forwarded to the critical object classifier for classification.

Although the critical object classifier takes away some of the time budget from the object detector, and thus slightly reduces the object detection efficiency of the object detector, this is overcompensated by the critical object classifier yielding a better classification result for critical objects, which are much more relevant for the vehicle safety than non-critical objects. Therefore, in total the object classification efficiency, and thereby the vehicle safety, can be enhanced by the critical object classifier.

The regular object detector is made aware of the reduced time budget and can prioritize accordingly. Preferably, the detector is designed such that, under time limitation, prioritization of detected objects is made based on parameters such as critical object types and important parts of the scene.

It is possible that a maximum time budget is set for the critical object classifier, for example in the range between 50% and 90% of the total classifying time budget, in order to ensure that sufficient time budget is left to the object detector under all circumstances.

According to the invention, the critical object classifier is not involved if the confidence level of a critical object classification by the object detector and classifier exceeds a predefined threshold, or in other words, it is only involved for those critical objects where the classification by the object detector is not sufficiently trustworthy. In this manner, the time consuming critical object classifier advantageously does not have to be involved if the classification by object detector is sufficiently trustworthy. In other words, if the object detector is certain enough about the classification of a critical object, the critical object classifier need not necessarily be involved, thus saving valuable processing time.

The critical object classifier may be designed to generally discard false detections of any object type. I.e., all objects estimated to have a large collision probability are fed to the critical object classifier, irrespective of their object type or class as determined by the classifier within the object detector.

In other embodiments, the critical object classifier may focus on known types of objects, as determined by the classifier within the object detector, and/or situations that are known to be problematic for the object detector. I.e. only critical objects of problematic type are fed to the critical object classifier, but not objects of non-problematic type which are known to be sufficiently well handled by the object detector. Alternatively, the critical object classifier is trained to suppress specific types of false detections.

A tracked object already verified by the critical object classifier in a previous frame may not be fed again to the critical object classifier in later frames. In other words, it can be sufficient if the same critical object, identified in a series of subsequent frames by the object tracker, is classified only once by the critical object classifier. This saves valuable processing time since multiple classification of one and the same critical object by the critical object classifier may waste processing time if no additional information can be obtained.

In the following the invention shall be illustrated on the basis of preferred embodiments with reference to the accompanying drawings, wherein:
- Fig. 1: shows a diagram of a vision system according to the present invention; and
- Fig. 2: shows a schematic flow diagram for illustrating the present invention.

The vision system 10 is mounted in a motor vehicle and comprises an imaging apparatus 11 for capturing images of a region surrounding the motor vehicle, for example a region in front of the motor vehicle. Preferably the imaging apparatus 11 comprises one or more optical imaging devices 12, in particular cameras, preferably operating in the visible and/or infrared wavelength range, where infrared covers near IR with wavelengths below 5 microns and/or far IR with wavelengths beyond 5 microns. In some embodiments the imaging apparatus 11 comprises a plurality imaging devices 12 in particular forming a stereo imaging apparatus 11. In other embodiments only one imaging device 12 forming a mono imaging apparatus 11 can be used.

The imaging apparatus 11 is coupled to a data processing device 14 adapted to process the image data received from the imaging apparatus 11. The data processing device 14 is preferably a digital device which is programmed or programmable and preferably comprises a microprocessor, microcontroller a digital signal processor (DSP), and/or a microprocessor part in a System-On-Chip (SoC) device, and preferably has access to, or comprises, a data memory 25.

The data processing device 14 may comprise a dedicated hardware device, like a Field Programmable Gate Array (FPGA) or an Application Specific Integrated Circuit (ASIC), or an FPGA and/or ASIC part in a System-On-Chip (SoC) device, for performing certain functions, for example controlling the capture of images by the imaging apparatus 11, receiving the electrical signal containing the image information from the imaging apparatus 11, rectifying or warping pairs of left/right images into alignment and/or creating disparity or depth images. The data processing device 14, or part of its functions, can be realized by a System-On-Chip (SoC) device comprising, for example, FPGA, DSP, ARM and/or microprocessor functionality.

The data processing device 14 and the data memory 25 are preferably realised in an on-board electronic control unit (ECU) and may be connected to the imaging apparatus 11 via a separate cable or a vehicle data bus. In another embodiment the ECU and one or more of the imaging devices 12 can be integrated into a single unit, where a one box solution including the ECU and all imaging devices 12 can be preferred. All steps from imaging, image processing to possible activation or control of safety device 18 are performed automatically and continuously during driving in real time.

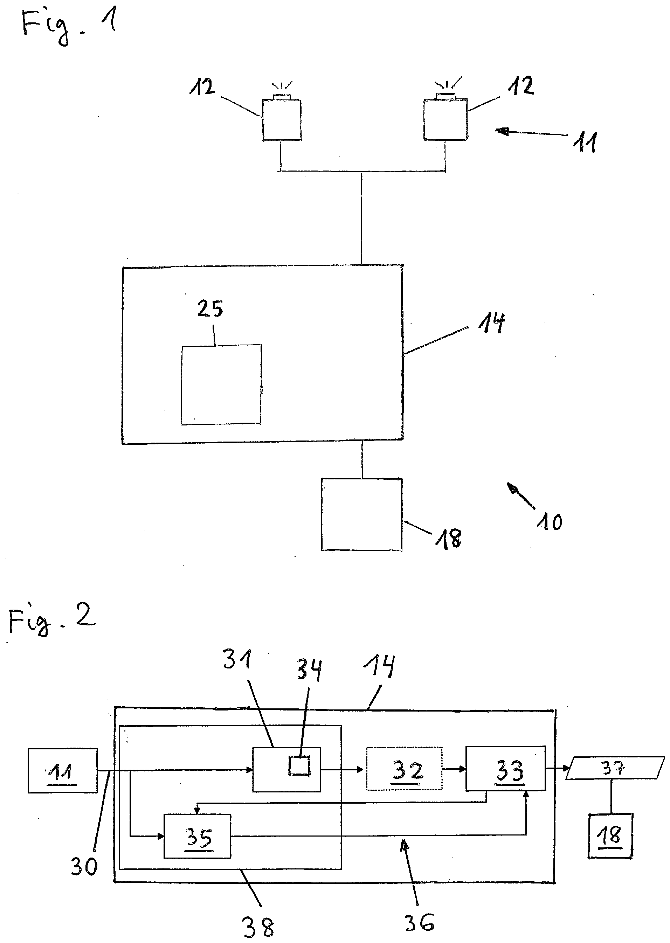

Image and data processing carried out in the processing device 14 advantageously comprises identifying and preferably also classifying, in an object detector 31 (see Figure 2) possible objects, or object candidates, in front of the motor vehicle, such as pedestrians, other vehicles, bicyclists, and/or large animals; optionally, tracking over time, in an optional object tracker 32, the position of objects or object candidates identified in the captured images, and activating or controlling at least one safety device 18 depending on an estimation performed with respect to a tracked object, for example on an estimated collision probability.

The safety device 18 may comprise at least one active safety device and/or at least one passive safety device. In particular, the safety device 18 may comprise one or more of: at least one safety belt tensioner, at least one passenger airbag, one or more restraint systems such as occupant airbags, a hood lifter, an electronic stability system, at least one dynamic vehicle control system, such as a brake control system and/or a steering control system, a speed control system; a display device to display information relating to a detected object; a warning device adapted to provide a warning to the driver by suitable optical, acoustical and/or haptic warning signals.

The invention is applicable to autonomous driving, in particular highly or fully autonomous driving, where the ego vehicle is an autonomous vehicle adapted to drive partly or fully autonomously or automatically, and driving actions of the driver are partially and/or completely replaced or executed by the ego vehicle.

In the following, the invention is described using the flow diagram shown in Figure 2.

Images 30 captured by the imaging apparatus 11 are fed to the object detector 31, where object candidates are classified by an object classifier 34 contained in the object detector 31. The object detector 31 is generally capable of detecting vulnerable road users like pedestrians and bicyclists, other motor vehicles, large animals, traffic lights, traffic signs, road markings, road boundaries, natural, constructed and/or other obstacles in the traffic environment. The object detector 31 can make use of neural networks, e.g. convolutional neural networks, support vector machines and/or random forest classifiers. The object classifier 34 may for example be a sliding-window boosting-based classifier. In some embodiments, detected objects or object candidates are tracked in subsequent frames by an object tracker 32. However, the object tracker 32 is not mandatory.

In the object detection and classification by the object detector 31, detected objects close to the ego-vehicle are preferably prioritized. The object detector 31 provides estimated image positions and detection confidences of detected objects to an object tracker 32. The object tracker 32 is used to estimate object position and velocities of detected objects over consecutive image frames.

Objects detected by the object detector 31 and tracked by the object tracker 32 are provided to the decision module 33. The decision module 33 identifies critical objects based on collision probability and/or predicted time to collision. Critical objects identified by the decision module 33 are forwarded to the critical object classifier 35 for verification, while non-critical objects are not forwarded to the critical object classifier 35.

The critical object classifier 35 preferably uses image data provided by the imaging apparatus 11 for verification processing. Preferably, therefore, the image data from the imaging apparatus 11 is stored in the data memory 25 of the data processing device 14 for later use by the critical object classifier 35. Information regarding a critical object detected in one time frame is preferably fed to the critical object classifier 35 for verification in a subsequent time frame, in particular the next following time frame. I.e., the critical object classifier 35 can operate on the captured image of the, or a, previous frame. Alternatively the critical object classifier 35 may use the image input of the current frame. In the latter case, a position predicted by the object tracker 32 is preferably used.

The classification result of the critical object classifier 35 regarding a critical object is fed back to the decision module 33, thus providing a feedback loop 36. The decision module 33 bases an intervention decision 37 regarding a critical object usually on the feedback provided by the critical object classifier 35 regarding this critical object, rather than the classification by the classifier 34 in the object detector 31, because the classification by the critical object classifier 35 is more reliable than the classification by the classifier 34 in the object detector 31. Intervention decisions regarding non-critical objects are based on the classification by the object detector 31.

The object detector 31 and the critical object classifier 35 use the same shared processing resources 38, i.e., the processing resources consumed by the critical object classifier 35 are taken from the processing resources of the object detector 31.

The time budget for the classification is such that the object detector 31 normally processes the entire image, or the most important portions thereof, and the results of the object detector 31 are not delivered until the processing is done, or the time budget is used. This means that verifying with the powerful critical object classifier 35 will not be performed until the processing by the object detector 31 is finished, resulting in that the critical object classifier 35 is permitted to use a time portion from the object detector 31 only in the next frame.

The object detector 31 and the critical object classifier 35 usually cannot run in parallel since they both use the same processing resources 38. The purpose of the invention is to use the processing resources in an efficient manner through prioritization. Detection of new objects is done after all potential critical objects detected in the previous frame have been verified or rejected by the critical object classifier 35. After receiving a verifying decision, the decision module 33 decides on suited action.

It should be noted that both the object detector 31 and the critical object classifier 35 operate in real time, i.e., the results from both the object detector 31 and from the critical object classifier 35 are suited for basing an intervention decision 37 on it.

The invention is particularly advantageously applicable to an automatic emergency brake system. In this application, as described above, the decision module 33 advantageously involves the critical object classifier 35 for confirmation and/or verification before sending a brake signal to the automatic emergency brake system 18.

In other embodiments, the vision system 10 is preferably not only allowed to break as an intervention action, but also to take evasive action such as steering in order to prevent a collision with an object in the vehicle environment.

## Claims

1. A vision system (10) for a motor vehicle, comprising an imaging apparatus (11) adapted to capture images (30) from a region surrounding the motor vehicle, a data processing device (14) comprising an object detector (31) adapted to detect and classify objects in the vehicle surrounding by processing images captured by said imaging apparatus (11), and a decision module (33) adapted to estimate a collision probability of a detected object with the motor vehicle, and to make an intervention decision (37) in case the detected object has a non-tolerable collision probability, wherein object candidates are classified by an object classifier (34) contained in the object detector (31), wherein the decision module (33) is adapted to identify, among all detected objects, a sub-group of critical objects having a high potential of causing an intervention based on collision probability and/or time to collision, wherein the system is **characterized in that** critical object classifier (35) is connected to the decision module (33) in a feedback loop (36), and the decision module (33) is adapted to feed information regarding identified critical objects to the critical object classifier (35) for verification, wherein the critical object classifier (35) is adapted to verify the classification of the object detector (31), and to feed back a result of the verification to the decision module (33), wherein the critical object classifier (35) uses image data (30) provided by the imaging apparatus (11) for verification processing and has higher classification capabilities than the object classifier (34) in the object detector, wherein the decision module (33) bases an intervention decision regarding a critical object on the feedback provided by the critical object classifier regarding said critical object, wherein the critical object classifier (35) is not involved if the confidence level of a critical object classification by the object detector and classifier (31) exceeds a predefined threshold.

2. The vision system as claimed in claim 1, **characterized in that** information regarding a critical object detected in one time frame is fed to the critical object classifier (35) for verification in a subsequent time frame.

3. The vision system as claimed in any one of the preceding claims, **characterized in that** information regarding a critical object detected in one time frame is fed to the critical object classifier (35) for verification in the next time frame.

4. The vision system as claimed in any one of the preceding claims, **characterized in that** the object detector (31) and the critical object classifier (35) share processing resources of the data processing device (14) by sharing a total processing time budget.

5. The vision system as claimed in claim 4, **characterized in that** the total processing time budget is completely allocated to the object detector (31) in case no critical object has been determined in the or a previous frame.

6. The vision system as claimed in claim 5, **characterized in that** a part of the total processing time budget is allocated to the critical object classifier (35) in case a critical object has been determined in the or a previous frame, and a correspondingly reduced time budget is allocated to the object detector (31).

7. The vision system as claimed in claim 6, **characterized in that** the object detector (31) is informed about its reduced processing time budget in case part of the total processing time budget is allocated to the critical object classifier (35).

8. The vision system as claimed in claim 7, **characterized in that** the object detector (31) is adapted to prioritize its object detection and classification processing according to the reduced time budget it has been informed about.

9. The vision system as claimed in any one of the preceding claims, **characterized in that** a critical object classified by the critical object classifier (35) in one frame is discarded from classification by the critical object classifier (35) in later frames.

10. The vision system as claimed in any one of the preceding claims, **characterized in that** the critical object classifier (35) discards false object detections of any object type.

11. The vision system as claimed in any one of the preceding claims, **characterized in that** the critical object classifier (35) is involved only for predefined objects and/or situations considered problematic for the object detector (31), and/or the critical object classifier (35) is adapted to suppress specific types of false object detections.

12. A vision method for a motor vehicle, comprising capturing images (30) from a region surrounding the motor vehicle, detecting and classifying objects in the vehicle surrounding by processing captured images in an object detector (31), wherein object candidates are classified by an object classifier (34) contained in an object detector (31), and estimating a collision probability of a detected object with the motor vehicle, and making an intervention decision in case the detected object has a non-tolerable collision probability, in a decision module (33), wherein the decision module (33) identifies, among all detected objects, a sub-group of critical objects having a high potential of causing an intervention based on collision probability and/or time to collision , wherein the method is **characterized in that** a critical object classifier (35) is connected to the decision module (33) in a feedback loop, and wherein the decision module (33) feeds information regarding identified critical objects to the critical object classifier (35) for verification, wherein the critical object classifier (35) verifies the classification of the object detector (31), and feeds back a result of the verification to the decision module (33), wherein the critical object classifier (35) uses image data (30) provided by the imaging apparatus (11) for verification processing and has higher classification capabilities than the object classifier (34) in the object detector (31), wherein the decision module (33) bases an intervention decision regarding a critical object on the feedback provided by the critical object classifier (35) regarding said critical object, wherein the critical object classifier (35) is not involved if the confidence level of a critical object classification by the object detector and classifier (31) exceeds a predefined threshold.

## Patentansprüche

1. Sichtsystem (10) für ein Kraftfahrzeug, das Folgendes umfasst: eine Bildgebungsvorrichtung (11), ausgelegt zum Aufnehmen von Bildern (30) von einer Region um das Kraftfahrzeug, ein Datenverarbeitungsgerät (14) mit einem Objektdetektor (31), ausgelegt zum Erkennen und Klassifizieren von Bildern von Objekten in der Umgebung des Fahrzeugs durch Verarbeiten von von der genannten Bildgebungsvorrichtung (11) aufgenommenen Bildern, und ein Entscheidungsmodul (33), ausgelegt zum Schätzen einer Kollisionswahrscheinlichkeit eines erkannten Objekts mit dem Kraftfahrzeug und zum Treffen einer Eingriffsentscheidung (37), falls das erkannte Objekt eine nicht tolerierbare Kollisionswahrscheinlichkeit hat, wobei Objektkandidaten durch einen in dem Objektdetektor (31) enthaltenen Objektklassifizierer (34) klassifiziert werden, wobei das Entscheidungsmodul (33) zum Identifizieren, unter allen erkannten Objekten, einer Untergruppe von kritischen Objekten mit einem hohen Potential ausgelegt ist, einen Eingriff auf der Basis von Kollisionswahrscheinlichkeit und/oder Zeit bis zur Kollision zu verursachen, wobei das System **dadurch gekennzeichnet ist, dass** ein Kritische-Objekte-Klassifizierer (35) mit dem Entscheidungsmodul (33) in einer Rückkopplungsschleife (36) verbunden ist und das Entscheidungsmodul (33) zum Zuführen von Informationen bezüglich identifizierter kritischer Objekte zu dem Kritische-Objekte-Klassifizierer (35) zur Verifizierung ausgelegt ist, wobei der Kritische-Objekte-Klassifizierer (35) zum Verifizieren der Klassifizierung des Objektdetektors (31) und zum Zurückmelden eines Ergebnisses der Verifizierung an das Entscheidungsmodul (33) ausgelegt ist, wobei der Kritische-Objekte-Klassifizierer (35) von der Bildgebungsvorrichtung (11) bereitgestellte Bilddaten (30) zur Verifizierungsverarbeitung verwendet und höhere Klassifizierungsfähigkeiten als der Objektklassifizierer (34) im Objektdetektor hat, wobei das Entscheidungsmodul (33) eine Eingriffsentscheidung bezüglich eines kritischen Objekts auf die vom Kritische-Objekte-Klassifizierer bezüglich des genannten kritischen Objekts bereitgestellte Rückmeldung stützt, wobei der Kritische-Objekte-Klassifizierer (35) nicht beteiligt ist, wenn das Konfidenzniveau einer Kritische-Objekte-Klassifizierung durch den Objektdetektor und Klassifizierer (31) einen vordefinierten Schwellenwert überschreitet.

2. Sichtsystem nach Anspruch 1, **dadurch gekennzeichnet, dass** Informationen bezüglich eines in einem Zeitrahmen erkannten kritischen Objekts dem Kritische-Objekte-Klassifizierer (35) zur Verifizierung in einem nachfolgenden Zeitrahmen zugeführt werden.

3. Sichtsystem nach einem der vorherigen Ansprüche, **dadurch gekennzeichnet, dass** Informationen bezüglich eines in einem Zeitrahmen erkannten kritischen Objekts dem Kritische-Objekte-Klassifizierer (35) zur Verifizierung im nächsten Zeitrahmen zugeführt werden.

4. Sichtsystem nach einem der vorherigen Ansprüche, **dadurch gekennzeichnet, dass** der Objektdetektor (31) und der Kritische-Objekte-Klassifizierer (35) Verarbeitungsressourcen des Datenverarbeitungsgeräts (14) durch gemeinsames Nutzen eines Gesamtverarbeitungszeit-Budgets gemeinsam nutzen.

5. Sichtsystem nach Anspruch 4, **dadurch gekennzeichnet, dass** das Gesamtverarbeitungszeit-Budget vollständig dem Objektdetektor (31) zugewiesen wird, falls in dem oder einem vorherigen Rahmen kein kritisches Objekt bestimmt wurde.

6. Sichtsystem nach Anspruch 5, **dadurch gekennzeichnet, dass** ein Teil des Gesamtverarbeitungszeit-Budgets dem Kritische-Objekte-Klassifizierer (35) zugewiesen wird, falls ein kritisches Objekt in dem oder einem vorherigen Rahmen bestimmt wurde, und ein entsprechend reduziertes Zeitbudget dem Objektdetektor (31) zugewiesen wird.

7. Sichtsystem nach Anspruch 6, **dadurch gekennzeichnet, dass** der Objektdetektor (31) über sein reduziertes Verarbeitungszeitbudget informiert wird, falls ein Teil des Gesamtverarbeitungszeit-Budgets dem Kritische-Objekte-Klassifizierer (35) zugewiesen wird.

8. Sichtsystem nach Anspruch 7, **dadurch gekennzeichnet, dass** der Objektdetektor (31) zum Priorisieren seiner Objekterkennungs- und -klassifizierungsverarbeitung entsprechend dem reduzierten Zeitbudget, über das er informiert wurde, ausgelegt ist.

9. Sichtsystem nach einem der vorherigen Ansprüche, **dadurch gekennzeichnet, dass** ein von dem Kritische-Objekte-Klassifizierer (35) in einem Rahmen klassifiziertes kritisches Objekt von der Klassifizierung durch den Kritische-Objekte-Klassifizierer (35) in späteren Rahmen ausgeschlossen wird.

10. Sichtsystem nach einem der vorherigen Ansprüche, **dadurch gekennzeichnet, dass** der Kritische-Objekte-Klassifizierer (35) falsche Objekterkennungen eines beliebigen Objekttyps verwirft.

11. Sichtsystem nach einem der vorherigen Ansprüche, **dadurch gekennzeichnet, dass** der Kritische-Objekte-Klassifizierer (35) nur bei vordefinierten Objekten und/oder Situationen, die für den Objektdetektor (31) als problematisch angesehen werden, beteiligt ist und/oder der Kritische-Objekte-Klassifizierer (35) zum Unterdrücken spezifischer Typen von falschen Objekterkennungen ausgelegt ist.

12. Sichtverfahren für ein Kraftfahrzeug, das das Aufnehmen von Bildern (30) von einer Region um das Kraftfahrzeug, das Erkennen und Klassifizieren von Objekten in der Umgebung des Fahrzeugs durch Verarbeiten von aufgenommenen Bildern in einem Objektdetektor (31), wobei Objektkandidaten durch einen in einem Objektdetektor (31) enthaltenen Objektklassifizierer (34) klassifiziert werden, und das Schätzen einer Kollisionswahrscheinlichkeit eines erkannten Objekts mit dem Kraftfahrzeug und das Treffen einer Eingriffsentscheidung, falls das erkannte Objekt eine nicht tolerierbare Kollisionswahrscheinlichkeit hat, in einem Entscheidungsmodul (33) beinhaltet, wobei das Entscheidungsmodul (33), unter allen erkannten Objekten, eine Untergruppe von kritischen Objekten mit einem hohen Potenzial identifiziert, einen Eingriff zu verursachen, auf der Basis von Kollisionswahrscheinlichkeit und/oder Zeit bis zur Kollision, wobei das Verfahren **dadurch gekennzeichnet ist, dass** ein Kritische-Objekte-Klassifizierer (35) mit dem Entscheidungsmodul (33) in einer Rückkopplungsschleife verbunden ist, und wobei das Entscheidungsmodul (33) Informationen bezüglich identifizierter kritischer Objekte dem Kritische-Objekte-Klassifizierer (35) zur Verifizierung zuführt, wobei der Kritische-Objekte-Klassifizierer (35) die Klassifizierung des Objektdetektors (31) verifiziert und dem Entscheidungsmodul (33) ein Ergebnis der Verifizierung zurückmeldet, wobei der Kritische-Objekte-Klassifizierer (35) von der Bildgebungsvorrichtung (11) bereitgestellte Bilddaten (30) zur Verifizierungsverarbeitung verwendet und höhere Klassifizierungsfähigkeiten als der Objektklassifizierer (34) im Objektdetektor (31) hat, wobei das Entscheidungsmodul (33) eine Eingriffsentscheidung bezüglich eines kritischen Objekts auf die von dem Kritische-Objekte-Klassifizierer (35) bezüglich des kritischen Objekts bereitgestellte Rückmeldung stützt, wobei der Kritische-Objekte-Klassifizierer (35) nicht beteiligt ist, wenn das Konfidenzniveau einer Kritische-Objekte-Klassifizierung durch den Objektdetektor und - klassifizierer (31) einen vordefinierten Schwellenwert überschreitet.

## Revendications

1. Système de vision (10) pour véhicule à moteur, comprenant un appareil d'imagerie (11) adapté pour capturer des images (30) d'une région entourant le véhicule à moteur, un dispositif de traitement de données (14) comprenant un détecteur d'objets (31) adapté pour détecter et classifier des objets dans l'environnement du véhicule en traitant des images capturées par ledit appareil d'imagerie (11), et un module de décision (33) adapté pour estimer une probabilité de collision d'un objet détecté avec le véhicule à moteur et prendre une décision d'intervention (37) dans le cas où l'objet détecté a une probabilité de collision non tolérable, dans lequel des objets candidats sont classifiés par un classificateur d'objets (34) contenu dans le détecteur d'objets (31), dans lequel le module de décision (33) est adapté pour identifier, parmi tous les objets détectés, un sous-groupe d'objets critiques ayant un potentiel élevé de susciter une intervention en fonction d'une probabilité de collision et/ou d'une imminence de collision,
le système étant **caractérisé en ce qu'**un classificateur d'objets critiques (35) est connecté au module de décision (33) dans une boucle de retour d'information (36) et le module de décision (33) est adapté pour transmettre des informations concernant des objets critiques identifiés au classificateur d'objets critiques (35) pour vérification, dans lequel le classificateur d'objets critiques (35) est adapté pour vérifier la classification du détecteur d'objets (31), et renvoyer un résultat de la vérification au module de décision (33), dans lequel le classificateur d'objets critiques (35) utilise des données d'image (30) fournies par l'appareil d'imagerie (11) pour un traitement de vérification et a des capacités de classification supérieures à celles du classificateur d'objets (34) dans le détecteur d'objets, dans lequel le module de décision (33) base une décision d'intervention concernant un objet critique sur le retour d'information fourni par le classificateur d'objets critiques concernant ledit objet critique, dans lequel le classificateur d'objets critiques (35) n'intervient pas si le niveau de confiance d'une classification d'objet critique par le détecteur d'objets et le classificateur (31) dépasse un seuil prédéfini.

2. Système de vision selon la revendication 1, **caractérisé en ce que** les informations concernant un objet critique détecté dans une trame de temps sont transmises au classificateur d'objets critiques (35) pour leur vérification ultérieure.

3. Système de vision selon l'une quelconque des revendications précédentes, **caractérisé en ce que** les informations concernant un objet critique détecté dans une trame de temps sont transmises au classificateur d'objets critiques (35) pour leur vérification dans la trame de temps suivante.

4. Système de vision selon l'une quelconque des revendications précédentes, **caractérisé en ce que** le détecteur d'objets (31) et le classificateur d'objets critiques (35) partagent des ressources de traitement du dispositif de traitement des données (14) en partageant un budget total de temps de traitement.

5. Système de vision selon la revendication 4, **caractérisé en ce que** le budget total de temps de traitement est entièrement alloué au détecteur d'objets (31) dans le cas où aucun objet critique n'a été déterminé dans la ou une trame précédente.

6. Système de vision selon la revendication 5, **caractérisé en ce qu'**une partie du budget total de temps de traitement est allouée au classificateur d'objets critiques (35) dans le cas où un objet critique a été déterminé dans la ou une trame précédente, et un budget de temps réduit en conséquence est alloué au détecteur d'objets (31).

7. Système de vision selon la revendication 6, **caractérisé en ce que** le détecteur d'objets (31) est informé de son budget de temps de traitement réduit dans le cas où une partie du budget total de temps de traitement est allouée au classificateur d'objets critiques (35).

8. Système de vision selon la revendication 7, **caractérisé en ce que** le détecteur d'objets (31) est adapté pour prioriser sa détection d'objets et son traitement de classification en fonction du budget de temps réduit dont il a été informé.

9. Système de vision selon l'une quelconque des revendications précédentes, **caractérisé en ce qu'**un objet critique classifié par le classificateur d'objets critiques (35) dans une trame est rejeté de la classification par le classificateur d'objets critiques (35) dans des trames ultérieures.

10. Système de vision selon l'une quelconque des revendications précédentes, **caractérisé en ce que** le classificateur d'objets critiques (35) rejette des détections de faux objets de tout type d'objet.

11. Système de vision selon l'une quelconque des revendications précédentes, **caractérisé en ce que** le classificateur d'objets critiques (35) n'intervient que pour des objets prédéfinis et/ou des situations considérées comme problématiques pour le détecteur d'objets (31), et/ou le classificateur d'objets critiques (35) est adapté pour supprimer des types spécifiques de détections de faux objets.

12. Procédé de vision pour véhicule à moteur, comprenant la capture d'images (30) d'une région entourant le véhicule à moteur, la détection et la classification d'objets dans l'environnement du véhicule en traitant des images capturées dans un détecteur d'objets (31), dans lequel des objets candidats sont classifiés par un classificateur d'objets (34) contenu dans un détecteur d'objets (31), et l'estimation d'une probabilité de collision d'un objet détecté avec le véhicule à moteur, et la prise d'une décision d'intervention dans le cas où l'objet détecté a une probabilité de collision non tolérable, dans un module de décision (33), dans lequel le module de décision (33) identifie, parmi tous les objets détectés, un sous-groupe d'objets critiques ayant un potentiel élevé de provoquer une intervention en fonction d'une probabilité de collision et/ou d'une imminence de collision,
le procédé étant **caractérisé en ce qu'**un classificateur d'objets critiques (35) est connecté au module de décision (33) dans une boucle de retour d'information, et dans lequel le module de décision (33) transmet des informations concernant des objets critiques identifiés au classificateur d'objets critiques (35) pour vérification, dans lequel le classificateur d'objets critiques (35) vérifie la classification du détecteur d'objets (31), et renvoie un résultat de la vérification au module de décision (33), dans lequel le classificateur d'objets critiques (35) utilise des données d'image (30) fournies par l'appareil d'imagerie (11) pour le traitement de vérification et a des capacités de classification supérieures à celles du classificateur d'objets (34) dans le détecteur d'objets (31), dans lequel le module de décision (33) base une décision d'intervention concernant un objet critique sur le retour d'information fourni par le classificateur d'objets critiques (35) concernant ledit objet critique, dans lequel le classificateur d'objets critiques (35) n'intervient pas si le niveau de confiance d'une classification d'objet critique par le détecteur d'objets et le classificateur (31) dépasse un seuil prédéfini.
